# EUROPEAN PATENT APPLICATION

(11) **EP 2 128 994 A2**
(43) Date of publication of application: **02.12.2009**
(21) Application number: 09157769.2
(22) Date of filing: 09.04.2009
(51) Int. Cl.: H04B 1/38

(54) **Stacking type sim card connector and mobile terminal having the same**

(30) Priority: 29.05.2008 KR 20080050016
(71) Applicant: Samsung Electronics Co., Ltd., Suwon-si, Gyeonggi-do (KR)
(72) Inventor: Roh, Yang Woon, Gyeonggi-do (KR); Kim, Sang Kyu, Gyeonggi-do (KR); Kim, Jung Min, Gyeonggi-do (KR)
(74) Representative: Boakes, Jason Carrington

(57) **Abstract**

A Subscriber Identity Module (SIM) card connector of a mobile terminal is provided. The SIM card connector includes a housing for mounting one or more SIM cards therein, a separation plate separating an internal space of the housing for mounting the one or more SIM cards in a stacked arrangement within the housing and at least one contact point for electrically connecting to at least one of the one or more SIM cards. Thereby, the SIM card connector for mounting two SIM cards in a stacked arrangement enables a dual SIM card mobile terminal requiring 1.5 times more parts than those of a general mobile terminal to effectively utilize available space.

## Description

### BACKGROUND OF THE INVENTION

### 1. Field of the Invention:

The present invention relates to a Subscriber Identity Module (SIM) card connector of a mobile terminal. More particularly, the present invention relates to a SIM card connector for accommodating one or more SIM cards.

### 2. Description of the Related Art:

Communication methods of a mobile terminal include a Global System for Mobile Communication (GSM) method and a Code Division Multiple Access (CDMA) method. The GSM method uses a Subscriber Identity Module (SIM) card in a mobile terminal in order to ensure compatibility between various network service subscribers. The SIM card stores most information used for operating the mobile terminal and encodes and stores data including related information such as a phone number and a network number as well as a subscriber's personal information such as a password. To electrically connect the SIM card with the mobile terminal, the mobile terminal has a SIM card connector provided on a main Printed Circuit Board (PCB) mounted in a main body.

In general, a mobile terminal requires and uses only one SIM card. Recently, as mobile terminals are now able to provide various additional services, a mobile terminal using two SIM cards (hereinafter, a 'dual SIM card mobile terminal') has been introduced. However, because the mobile phone using two SIM card connectors uses around 1.5 times as many parts as a mobile phone using a single SIM card, designing of the dual SIM card mobile terminal is difficult. Further, in order to develop a small-sized mobile phone according to a recent market trend and consumer demand, it is important to decrease the size of a mounting structure of a SIM card connector. Further, when the mobile phone has two SIM cards, an additional circuit for controlling each SIM card is required, thus requiring a more efficient layout of the PCB for accommodating two SIM cards.

Therefore, a need exists for a SIM card connector for decreasing the size of a mounting structure of a SIM card connector of the mobile terminal and for overcoming a spatial limitation of the PCB thereof.

### SUMMARY OF THE INVENTION

An aspect of the present invention is to address at least the above-mentioned problems and/or disadvantages and to provide at least the advantages described below. Accordingly, an aspect of the present invention is to provide a Subscriber Identity Module (SIM) card connector that can mount at least two SIM cards in a stacked arrangement in order to minimize an area of a SIM card connector on a Printed Circuit Board (PCB) in a mobile terminal.

Another aspect of the present invention is to provide a SIM card connector that can connect each of at least two SIM cards to a master processor or a slave processor without mounting an additional part on the PCB.

In accordance with an aspect of the present invention, a SIM card connector is provided. The connector includes a housing for mounting one or more SIM cards therein, a separation plate separating an internal space of the housing for mounting the one or more SIM cards in a stacked arrangement within the housing and at least one contact point for electrically connecting to the one or more SIM cards.

In an exemplary implementation, the at least one contact point is formed in at least one of the separation plate and the housing.

In an exemplary implementation, the housing includes a SIM card insertion unit formed in one surface thereof for inserting the one or more SIM cards. Furthermore, the SIM card insertion unit may include a protrusion, a detent, a frictional fit and an indentation.

In an exemplary implementation, the housing includes a SIM card insertion unit formed in one surface thereof and in the surface opposite thereto for inserting the one or more SIM cards.

In an exemplary implementation, at least one of the contact points determines whether the one or more SIM cards is mounted in the housing.

In an exemplary implementation, the SIM card connector further includes at least one additional contact point for determining whether the one or more SIM cards is mounted in the housing.

In accordance with another aspect of the present invention, a mobile terminal is provided. The terminal includes a master processor, a slave processor, and a SIM card connector including a housing, a separation plate separating an internal space of the housing for mounting a first SIM card and a second SIM card in a stacked arrangement within the housing, and at least one contact point for electrically connecting to at least one of the first SIM card and the second SIM card, wherein one of the at least one of the contact points determines whether at least one of the first SIM card and the second SIM card is mounted in the housing.

In an exemplary implementation, if only the first SIM card is mounted in the housing, the first SIM card is connected to the master processor.

In an exemplary implementation, if both the first SIM card and the second SIM card are mounted in the housing, the first SIM card is connected to the master processor and the second SIM card is connected to the slave processor.

In accordance with yet another aspect of the present invention, a mobile terminal is provided. The terminal includes a master processor, a slave processor, and a SIM card connector including a housing, a separation plate separating an internal space of the housing for mounting a first SIM card and a second SIM card in a stacked arrangement within the housing, at least one contact point for electrically connecting at least one of the first SIM card and the second SIM card, and at least one additional contact point for determining whether at least one of the first SIM card and the second SIM card is mounted in the housing.

In an exemplary implementation, if only the first SIM card is mounted in the housing, the first SIM card is connected to the master processor.

In an exemplary implementation, if both the first SIM card and the second SIM card are mounted in the housing, the first SIM card is connected to the master processor and the second SIM card is connected to the slave processor.

In accordance with still another aspect of the present invention, a method of selecting a SIM card of a mobile terminal having a master processor, a slave processor, and a dual SIM card connector, is provided. The method includes supplying power to the mobile terminal, determining whether at least one of a first SIM card and a second SIM card is mounted in the dual SIM card connector and connecting, if only the first SIM card is mounted in the dual SIM card connector, the first SIM card to the master processor.

In an exemplary implementation, the method further includes connecting, if both the first SIM card and the second SIM card are mounted in the dual SIM card connector, the first SIM card to the master processor and the second SIM card to the slave processor.

In an exemplary implementation, the method further includes connecting, if only the second SIM card is mounted in the dual SIM card connector, the second SIM card to the master processor.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description in conjunction with the accompanying drawings, in which:

FIG. 1 is a perspective view illustrating a Subscriber Identity Module (SIM) card connector according to an exemplary embodiment of the present invention;

FIG. 2A is a perspective view illustrating a SIM card connector according to an exemplary embodiment of the present invention;

FIG. 2B is a view of an upper surface of the SIM card connector of FIG. 2A;

FIG. 2C is a view of a lower surface of the SIM card connector of FIG. 2A;

FIG. 3 is a perspective view illustrating a SIM card connector according to an exemplary embodiment of the present invention;

FIGs. 4A and 4B are cross-sectional views illustrating an exemplary state in which the SIM card connector of FIG. 1 includes a plurality of SIM cards and is mounted on a PCB;

FIG. 4C is a cross-sectional view illustrating an exemplary state in which the SIM card connector of FIG. 2A includes a plurality of SIM cards and is mounted on a Printed Circuit Board (PCB);

FIG. 5 is a perspective view illustrating a SIM card connector for selecting a SIM card according to an exemplary embodiment of the present invention;

FIG. 6 is a table illustrating a connection result according to a mounting state of SIM cards according to an exemplary embodiment of the present invention;

FIG. 7 is a flowchart illustrating a method of selecting a SIM card in a SIM card connector according to an exemplary embodiment of the present invention; and

FIG. 8 is a block diagram illustrating a connection state of a master processor, a slave processor, and SIM cards of a mobile terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

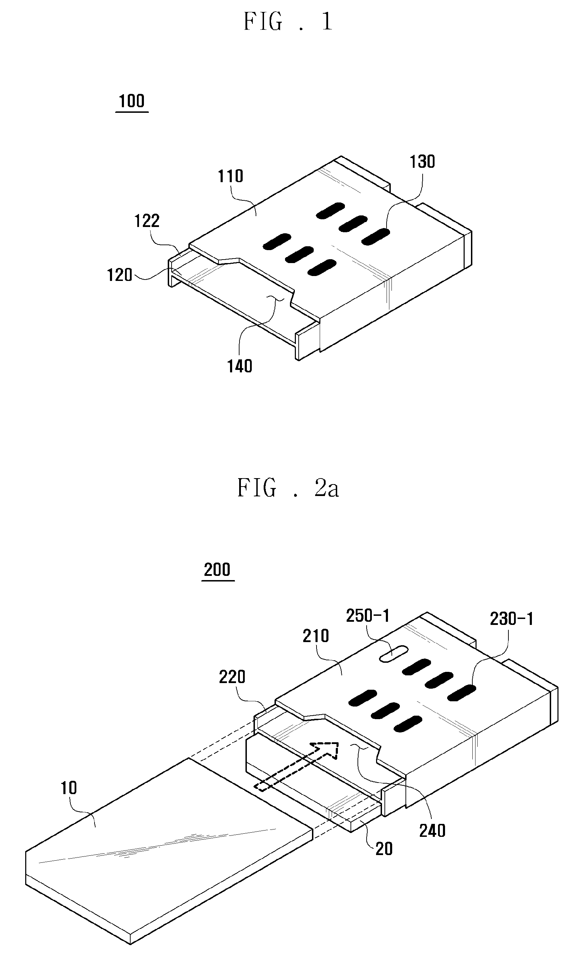

FIG. 1 is a perspective view illustrating a Subscriber Identity Module (SIM) card connector according to an exemplary embodiment of the present invention.

A SIM card connector 100 includes a housing 110, a separation plate 120, and at least one contact point 130. In the present exemplary embodiment, the housing 110 has a rectangular shape and can vertically stack one or more SIM cards in a mobile terminal. However, the housing 110 is not limited to a rectangular shape, and may have various other shapes in which one or more SIM cards may be mounted. Furthermore, while the following examples show two SIM cards installed in a SIM card connector, this is merely for example and ease of description. Accordingly, it is to be understood that 3 or more SIM cards are also embodied by the present invention.

In the housing 110, a SIM card insertion unit 140 for inserting one or more SIM cards is formed. The SIM card insertion unit 140 may be formed only in one surface of the housing 110, or may be formed both in one surface thereof and in the surface opposite thereto. In an exemplary implementation, the insertion unit 140 includes a space within the SIM card connector 100. Alternatively, the insertion unit 140 may include a protrusion, a detent, an indentation, a frictional fit or other similar mechanism for guiding, stabilizing and/or holding the SIM card in place.

The separation plate 120 separates an internal space of the housing 110 such that one or more SIM cards may be mounted in a stacked arrangement within the housing 110 of the dual SIM card mobile terminal. The housing 110 includes at least one contact point 130 for electrically connecting each SIM card, and the contact point 130 is electrically connected to a Printed Circuit Board (PCB). According to another exemplary embodiment, at least one contact point 130 for electrically connecting the SIM card may be provided in the separation plate 120.

Further, when the SIM card is mounted within the housing 110, the separation plate 120 may include various forms of a guide unit 122 extended from a side surface of the separation plate 120 in order to guide the SIM card.

According to another exemplary embodiment, the housing 110 and the separation plate 120 may be integrally formed.

Because one or more SIM cards is mounted in a stacked arrangement using the separation plate 120 to separate the SIM cards within the housing 110, a space within a mobile terminal can be more efficiently used.

FIG. 2a is a perspective view illustrating a SIM card connector according to an exemplary embodiment of the present invention.

Referring to FIG. 2a, a SIM card connector 200 includes a housing 210 and a separation plate 220. A first SIM card 10 and a second SIM card 20 are mounted in a structure comprising layers by using the separation plate 220 as a separator. The first SIM card 10 and the second SIM card 20 are inserted through a SIM card insertion unit 240 formed in one surface of the housing 210.

The first SIM card 10 and the second SIM card 20 are mounted in the SIM card connector 200 using various methods, such as a slide tray method, insertion method, push-pull method, and push-push method.

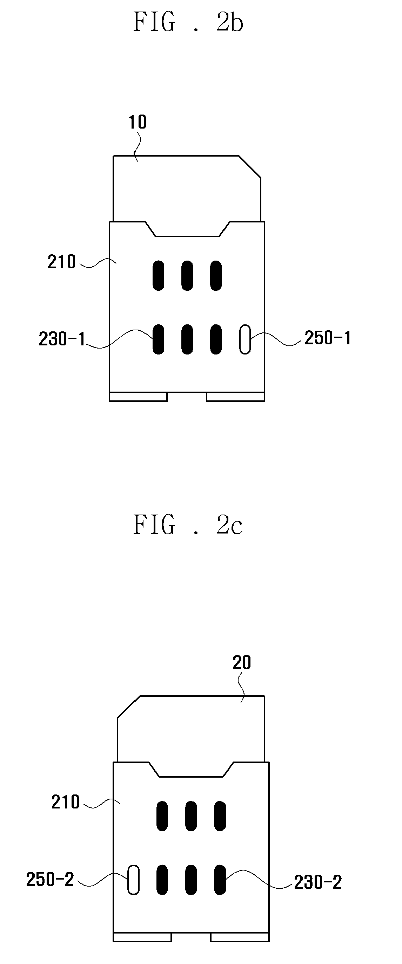

FIG. 2b is a view of an upper surface of the SIM card connector 200 of FIG. 2a.

Referring to FIG. 2b, the housing 210 includes 6 contact points 230-1, and an additional contact point 250-1 for determining whether the first SIM card 10 is mounted. The plurality of contact points 230-1 and the additional contact point 250-1 of the housing 210 are for connection to corresponding contact points of the first SIM card 10.

FIG. 2c is a view of a lower surface of the SIM card connector 200 of FIG. 2a.

Referring to FIG. 2c, the housing 210 includes 6 contact points 230-2, and an additional contact point 250-2 for determining whether the second SIM card 20 is mounted. The plurality of contact points 230-2 and the additional contact point 250-2 of the housing 210 are for connection to contact points of the second SIM card 20.

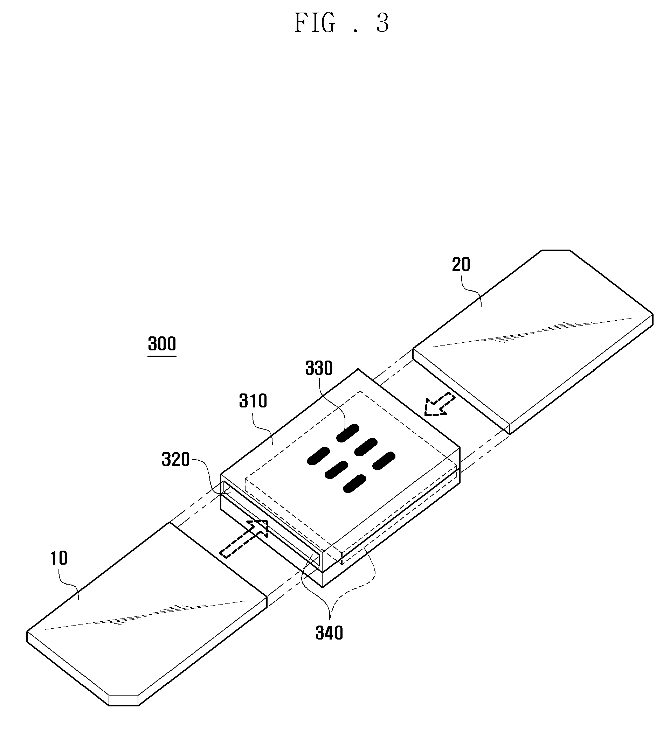

FIG. 3 is a perspective view illustrating a SIM card connector according to an exemplary embodiment of the present invention.

A SIM card connector 300 includes a housing 310, a separation plate 320, and at least one contact point 330. The housing 310 includes a SIM card insertion unit 340 formed in one end surface of the housing 310 and in the end surface opposite thereto for inserting SIM cards. In this case, each of the SIM cards can be inserted into one end surface of the housing 310 and the end surface opposite thereto.

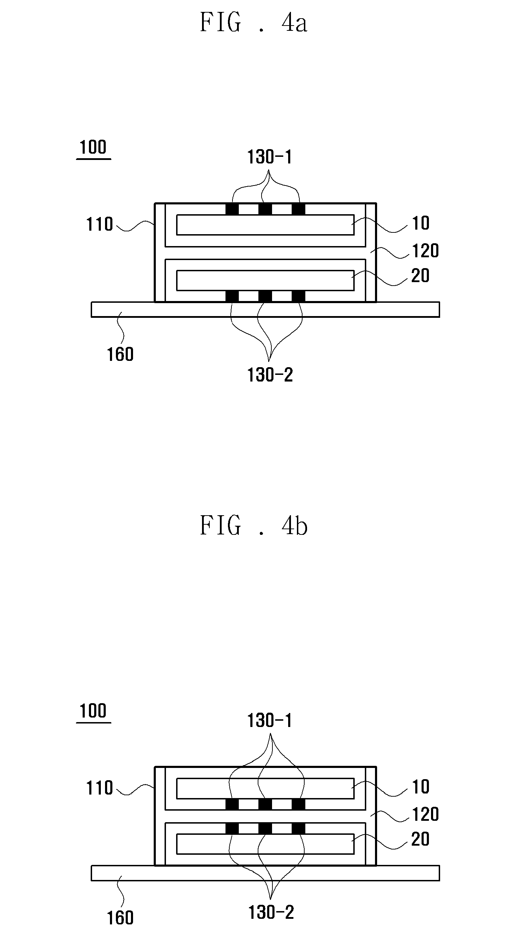

FIGs. 4a and 4b are cross-sectional views illustrating an exemplary state in which the SIM card connector 100 includes a plurality of SIM cards and is mounted on a PCB 160.

Referring to FIG. 4a, a first SIM card 10 and a second SIM card 20 are mounted in the SIM card connector 100. The SIM card connector 100 is electrically connected to the first SIM card 10 and the second SIM card 20 through contact points 130-1 and 130-2, respectively, formed in the housing 110. That is, the contact points 130-1 and 130-2 included in the SIM card connector 100 are connected to contact points of the SIM cards 10 and 20, respectively. The contact points 130-1 and 130-2 are electrically connected to a PCB 160.

Locations of the contact points 130-1 and 130-2 are not limited to those described in relation to FIG. 4a. For example, as shown in FIG. 4b, the contact points 130-1 and 130-2 may be formed in the separation plate 120 of the SIM card connector 100. The first SIM card 10 and the second SIM card 20 are electrically connected to the SIM card connector 100 through the contact points 130-1 and 130-2, respectively, formed in the separation plate 120.

According to the exemplary embodiment of FIGs. 4a and 4b, the contact points 130-1 and 130-2 are formed either in the separation plate 120 or in the housing 110. However, the contact point 130-1 for connection to the first SIM card 10 may be formed in the separation plate 120, and the contact point 130-2 for connection to the second SIM card 20 may be separated from the housing 110.

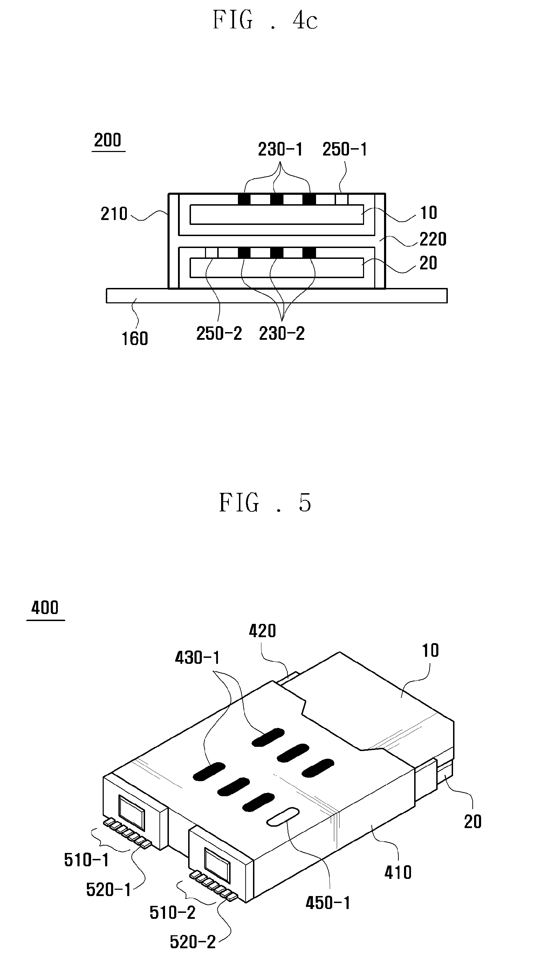

FIG. 4c is a cross-sectional view illustrating an exemplary state in which the SIM card connector 200 includes a plurality of SIM cards and is mounted on a PCB 160.

Referring to FIG. 4c, the first SIM card 10 and the second SIM card 20 are mounted in the SIM card connector 200. The first SIM card 10 is electrically connected to the SIM card connector 200 through the contact points 230-1 formed in the housing 210. The second SIM card 20 is electrically connected to the SIM card connector 200 through the contact points 230-2 formed in the separation plate 220.

Further, the SIM card connector 200 includes additional contact points 250-1 and 250-2 for determining whether the first SIM card 10 and the second SIM card 20 are mounted.

FIG. 5 is a perspective view illustrating a SIM card connector for selecting a SIM card according to an exemplary embodiment of the present invention.

Referring to FIG. 5, a SIM card connector 400 includes a housing 410, separation plate 420, and contact pin set 510. The contact pin set 510 electrically connects the SIM card with the mobile terminal and is configured according to the quantity of SIM cards that can be mounted in the SIM card connector 400. In the illustrated exemplary embodiment, in order to control a connection between the first and second SIM cards 10 and 20 and a master processor and a slave processor (not shown) mounted in the SIM card connector 400, the contact pin set 510 includes a first contact pin set 510-1 and a second contact pin set 510-2. The contact pin sets 510-1 and 510-2 receive signals corresponding to contact points of the first and second SIM cards 10 and 20, and are electrically connected to the mobile terminal.

The SIM card connector 400 may further include control pins 520-1 and 520-2 for receiving a signal according to whether the first SIM card 10 and the second SIM card 20 are mounted. Further, the separation plate 420 and the housing 410 may include additional contact points 450-1 and 450-2 (not illustrated) for determining whether the first SIM card 10 and the second SIM card 20 are mounted.

When the additional contact points 450-1 and 450-2 determine that the first SIM card 10 and the second SIM card 20 are mounted, the first SIM card 10 and the second SIM card 20 are connected to the master processor or the slave processor.

According to an exemplary embodiment, at least one of the contact pins included in the contact pin sets 510-1 and 510-2 may receive a signal according to whether the first SIM card 10 and the second SIM card 20 are mounted. In this case, at least one of the contact points 430-1 and at least one of the contact points 430-2 connected to corresponding contact points of the first SIM card 10 and the second SIM card 20, respectively, mounted in the separation plate 420 or the housing 410 determine whether the first SIM card 10 and the second SIM card 20 are mounted, therefore the additional contact points 450-1 and 450-2 may be omitted.

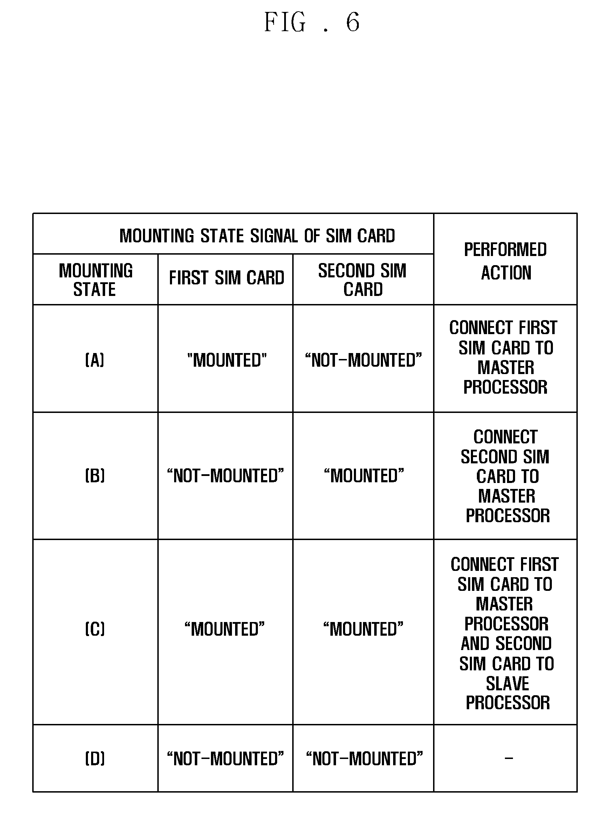

FIG. 6 is a table illustrating a connection result according to a mounting state of SIM cards according to an exemplary embodiment of the present invention.

Referring to FIG. 6, four connection operations can be performed according to a mounting state of two SIM cards. In an exemplary embodiment, an additional contact point determines whether a SIM card is mounted. A contact pin corresponding to the additional contact point generates a "mounted" signal when a SIM card is mounted in the corresponding part of the SIM card connector and generates a "not-mounted" signal when no SIM card is mounted in the corresponding part of the SIM card connector.

In an exemplary embodiment, one of a plurality of contact points determines whether a SIM card is mounted. A contact pin of one of the contact pin sets corresponding to a plurality of contact points generates a corresponding "mounted" or "not-mounted" signal.

In the illustrated exemplary embodiment, possible mounting states can be classified into (a) when a first SIM card is mounted and a second SIM card is not mounted, (b) when the first SIM card is not mounted and the second SIM card is mounted, (c) when both the first SIM card and the second SIM card are mounted, and (d) when both the first SIM card and the second SIM card are not mounted.

Referring to the table of FIG. 6, in the cases of (a) and (b), the first SIM card and the second SIM card, respectively, mounted in the SIM card connector is connected to the master processor. In the case of (c), the first SIM card is connected to the master processor and the second SIM card is connected to the slave processor. In the case of (d), the mobile terminal does not operate.

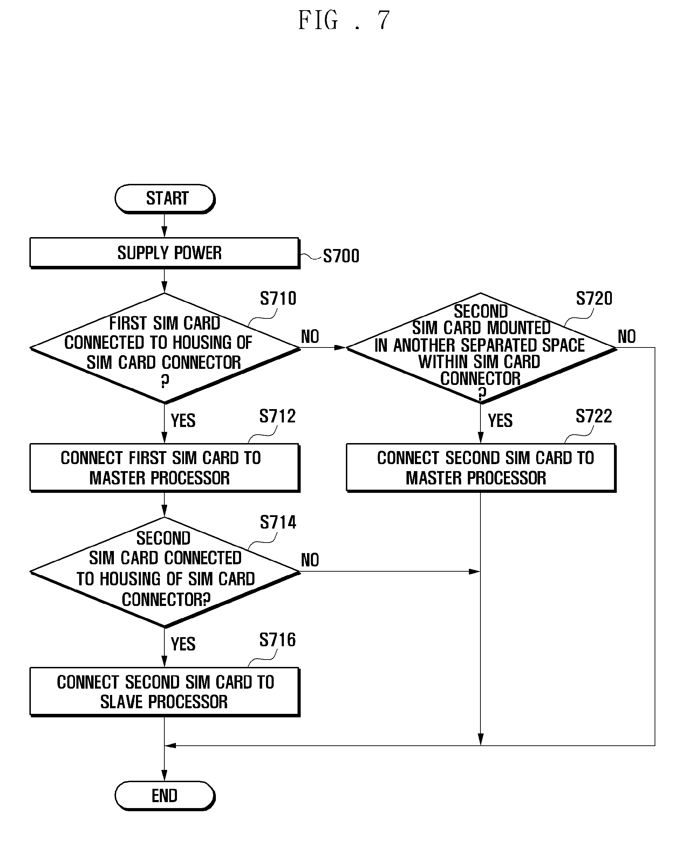

FIG. 7 is a flowchart illustrating a method of selecting a SIM card in a SIM card connector according to an exemplary embodiment of the present invention.

Referring to FIG. 7, when power of the mobile terminal is turned off, if a user presses a power key of an input unit, power is supplied to units of the mobile terminal in step S700.

When power is supplied, it is determined whether a first SIM card is connected to a housing of the SIM card connector in step S710. In an exemplary implementation, an additional contact point provided in the SIM card connector determines whether a first SIM card is connected to the housing.

If it is determined that a first SIM card is connected to the housing of the SIM card connector, i.e. if a first SIM card is mounted in a separated space within the SIM card connector, a control pin generates a "mounted" signal, and the SIM card connector connects the first SIM card to a master processor of the mobile terminal in step S712.

In step S714, it is determined whether a second SIM card is connected to the housing of the SIM card connector. In an exemplary implementation, an additional contact point provided in the SIM card connector determines whether a second SIM card is connected to the housing.

If it is determined that a second SIM card is connected to the housing of the SIM card connector, i.e. if a second SIM card is mounted in another separated space within the SIM card connector, the control pin generates a "mounted" signal, and the SIM card connector connects the second SIM card to a slave processor of the mobile terminal in step S716.

Alternatively, if it is determined that a first SIM card is not mounted in a separated space within the SIM card connector at step S710, the control pin generates a "not-mounted" signal and proceeds to step S720 where it is determined whether a second SIM card is mounted in another separated space within the SIM card connector. In an exemplary implementation, an additional contact point provided in the SIM card connector determines whether a second SIM card is connected to the housing

If it is determined that a second SIM card is mounted in another separated space within the SIM card connector, the control pin generates a "mounted" signal and the SIM card connector connects the second SIM card to the master processor of the mobile terminal in step S722.

If it is determined that a second SIM card is not mounted in another separated space within the SIM card connector at step S720, the control pin generates a "not-mounted" signal, and the method of connecting the SIM card terminates.

In an exemplary implementation, an additional contact point determines whether a SIM card is mounted at each step.

According to another exemplary implementation, each of a plurality of contact points may determine whether a corresponding SIM card is mounted. Therefore, each of one or more SIM cards may be connected to the master processor or the slave processor according to whether the SIM card is mounted.

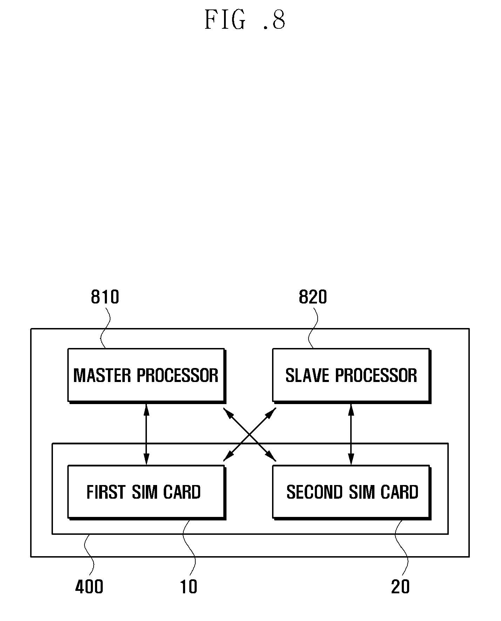

FIG. 8 is a block diagram illustrating a connection state of a master processor, a slave processor, and SIM cards of a mobile terminal according to an exemplary embodiment of the present invention.

Referring to FIG. 8, a SIM card connector 400 includes a housing, a separation plate, and at least one contact point. The housing mounts one or more SIM cards therein. The separation plate separates an internal space of the housing such that one or more SIM cards may be mounted in a stacked arrangement within the housing. The contact point is for electrical connection to the one or more SIM cards. The SIM card connector 400 may further include an additional contact point for determining whether a first SIM card and/or a second SIM card are mounted.

At least one of the contact points and the additional contact point provided in the SIM card connector 400 determines whether one or more SIM cards are mounted. The first SIM card 10 and the second SIM card 20 are connected to a master processor 810 or a slave processor 820 according to a mounting state of the first SIM card 10 and the second SIM card 20.

As described above, according to exemplary embodiments of the present invention, by providing a SIM card connector that can mount one or more SIM cards in a stacked arrangement, a multiple SIM card mobile terminal requiring more parts than those of a single SIM card general mobile terminal can effectively utilize available space.

Further, by providing an additional contact point in a housing or a separation plate of the SIM card connector and by connecting each of one or more SIM cards mounted in the SIM card to a master process or a slave processor, it is unnecessary to mount an additional part on a PCB.

Although exemplary embodiments of the present invention have been described in hereinabove, it should be clearly understood that many variations and modifications of the basic inventive concepts herein described, which may appear to those skilled in the art, will still fall within the spirit and scope of the present invention as defined in the appended claims and their equivalents.

## Claims

1. A Subscriber Identity Module (SIM) card connector, the connector comprising:
a housing for mounting SIM cards therein;
a separation plate for separating an internal space of the housing, mounting the SIM cards in a stacked arrangement within the housing; and
contact points for electrically connecting to at least one of the SIM cards.

2. The connector of claim 1, wherein the contact points are coupled to at least one of the separation plate and the housing.

3. The connector of claim 1, wherein the housing comprises a SIM card insertion unit formed in one surface thereof for inserting the SIM cards.

4. The connector of claim 1, wherein the housing comprises a SIM card insertion unit formed in one surface thereof and in the surface opposite thereto for inserting SIM cards.

5. The connector of claim 1 or 2, wherein at least one of the contact points is used for determining whether at least one of the SIM cards is mounted in the housing.

6. The connector of claim 1 or 2, further comprising at least one additional contact point for determining whether at least one of the SIM cards is mounted in the housing.

7. A mobile terminal, the terminal comprising:
a master processor;
a slave processor; and
a SIM card connector comprising a housing, a separation plate separating an internal space of the housing for mounting a first SIM card and a second SIM card in a stacked arrangement within the housing, and contact points for electrically connecting to at least one of the first SIM card and the second SIM card.

8. The terminal of claim 7, wherein at least one of the contact points is used for determining whether at least one of the first SIM card and the second SIM card is mounted in the housing.

9. The terminal of claim 8, wherein, if the first SIM card is mounted in the housing, the first SIM card is connected to the master processor.

10. The terminal of claim 8, wherein, if both the first SIM card and the second SIM card are mounted in the housing, the second SIM card is connected to the slave processor.

11. The terminal of claim 7, further comprising at least one additional contact point for determining whether at least one of the first SIM card and the second SIM card is mounted in the housing.

12. The terminal of claim 11, wherein, if the first SIM card is mounted in the housing, the first SIM card is connected to the master processor.

13. The terminal of claim 11, wherein if both the first SIM card and the second SIM card are mounted in the housing, the second SIM card is connected to the slave processor.

14. A method of selecting a SIM card of a mobile terminal having a master processor, a slave processor, and a dual SIM card connector, the method comprising:
supplying power to the mobile terminal;
determining whether at least one of a first SIM card and a second SIM card is mounted in the dual SIM card connector; and
connecting, if the first SIM card is mounted in the dual SIM card connector, the first SIM card to the master processor.

15. The method of claim 14, further comprising connecting, if both the first SIM card and the second SIM card are mounted in the dual SIM card connector, the second SIM card to the slave processor.
